# EUROPÄISCHE PATENTSCHRIFT

(11) **EP 1 116 642 B1**
(45) Veröffentlichungstag und Bekanntmachung des Hinweises auf die Patenterteilung: **03.09.2003**
(21) Anmeldenummer: 00127515.5
(22) Anmeldetag: 15.12.2000
(51) Int. Cl.: B62D 33/02, B61D 3/08, B61D 45/00

(54) **Bewegliche Runge zur Sicherung von Ladungen auf einer Ladefläche eines Transportfahrzeuges**
Movable stanchion for securing loads on the plateform of a transport vehicle
Rancher mobile pour sécuriser des chargements sur une plateforme de véhicule de transport

(30) Priorität: 16.12.1999 DE 19960771
(43) Veröffentlichungstag der Anmeldung: 18.07.2001
(73) Patentinhaber: Waggonbau Elze GmbH & Co. Besitz KG, 31008 Elze (DE)
(72) Erfinder: Höhne, Wolfram, 22339 Hamburg (DE)
(74) Vertreter: Gosch, Wolf-Dietrich

(56) Entgegenhaltungen:
- DE-A- 1 755 384
- DE-A- 4 235 831
- DE-A- 19 538 078
- DE-A- 19 849 665
- DE-C- 206 368

## Beschreibung

Die Erfindung betrifft eine Ladefläche eines Transportfahrzeuges, wie z.B. eines Eisenbahnflachwagens, eines Containerflats, eines LKWs oder Schiffes mit Vorrichtungen zur Sicherung von Ladung mit einer Mehrzahl von mit der Ladefläche beweglich verbundenen Rungen, die in entlang der Seitenkanten der Ladefläche angeordneten Rungentaschen in vertikaler Stellung einsetzbar sind, wobei eine Runge im Bereich ihres der Rungentasche zugewandten unteren Endes in Längsrichtungen der Runge verlaufende Führungsschlitze aufweist, die von einem quer über die Rungentasche verlaufenden Sicherungsbolzen durchdrungen sind.

Derartige Vorrichtungen sind aus der DE-U-1755384 bekannt. Sie werden vorzugsweise bei Eisenbahnwagen verwendet, insbesondere bei Flachwagen und mit Plane gedeckten Flachwagen. Bekannt sind steckbare oder klappbare Seitenrungen, die bei Bedarf eingesteckt oder hochgeklappt werden können. Die hochgeklappten Seitenrungen zeichnen sich durch eine verliersichere Ausführung aus. Be sonders beim Einsatz in Eisenbahnwagen ist die Verliersicherheit einer solchen Vor richtung von großer Bedeutung. Die bekannten Rungen sind aber lediglich in der Lage, entlang der Außenkanten der Ladefläche eingesetzt zu werden, nicht jedoch als Ladungssicherung im Bereich abseits der Außenkanten
der Ladefläche. Hierfür werden beispielsweise Klötze auf die Holzbohlen einer La defläche genagelt, um ein seitliches Verrutschen der Ladung zu verhindern. Außer dem sind Vorrichtungen bekannt, bei denen in Längsrichtung des Wagens Winkel oder ähnliche Teile in Schienen oder Haltelöchern, die in der Ladefläche angeordnet sind, festgelegt werden, um damit ein seitliches oder in Längsrichtung mögliches Verrutschen der Ladung zu verhindern. Besonders die Vorrichtungen, die in Schlitzen in der Ladefläche gehalten werden, sind oftmals nicht verliersicher, so daß ein Verlust im laufenden Betrieb häufig vorkommt, was unter anderem zu nicht unerheblichen Verlusten und Gefahren führen kann.

Aufgabe der vorliegenden Erfindung ist es daher, eine Ladefläche der eingangs genannten Art mit Vorrichtungen zu schaffen, die sowohl als klappbare Rungen im Bereich der Außenkanten der Ladeflächen eingesetzt werden können wie auch als auf der Ladefläche variabel festlegbare Ladungssicherungen verwendet werden können.

Diese Aufgabe wird erfindungsgemäß dadurch gelöst, daß ein mit einer Kugel an seinem Ende versehener Sicherungshaken das Ende der Runge überragt, dem eine Kulisse zu seiner Einführung und eine in Querrichtungen der Ladefläche sich erstreckende, mit Aufnahmebuchten für den Sicherungshaken versehene Führungsschiene zugeordnet sind.

Eine derartige Runge kann in der Nichtgebrauchslage weggeklappt und in einer Lagertasche untergebracht werden, die in ihren Abmessungen etwa denen der Runge entspricht, so daß mit der Ladefläche fluchtet und der Ladebetrieb z.B. mit Hilfe von Gabelstaplern nicht behindert wird.

Diese Runge kann zur seitlichen Sicherung der Ladung auf der Ladefläche entlang ihrer Außenkante aufgestellt und in die Rungentasche eingesenkt werden. Darüber hinaus kann die Runge in einer in etwa parallel zur Ladefläche verlaufenden Stellung angehoben und in Richtungen auf die Mitte der Ladefläche hin abgesenkt und als seitliche Ladungssicherung in zentraleren Bereichen der Ladefläche eingesetzt werden.

Weitere Einzelheiten der Erfindung ergeben sich aus der nachfolgenden ausführlichen Beschreibung und dem beigefügten Zeichnungen, in denen eine bevorzugte Ausführungsform der Erfindung in schematischer Darstellung beispielsweise veranschaulicht sind.

In den Zeichnungen zeigen:

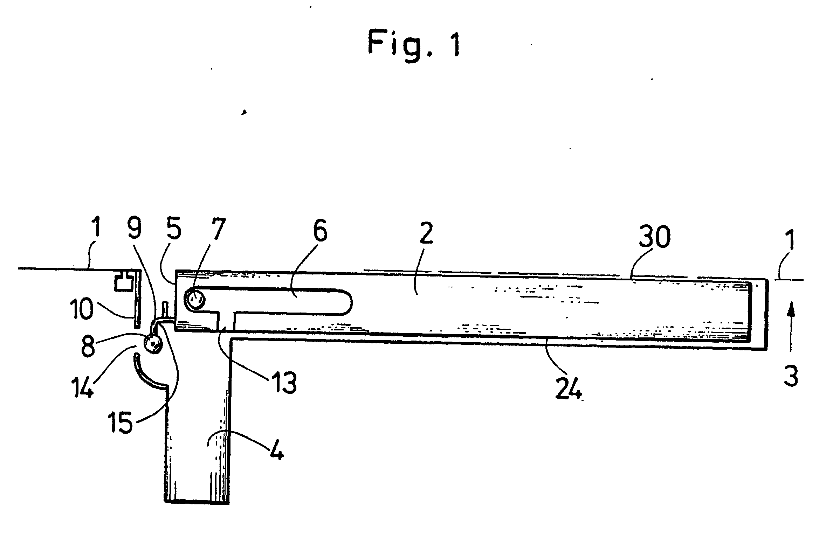

- Fig. 1:: Eine Seitenansicht einer Ladefläche mit einer Runge in ihrer Nichtgebrauchslage;

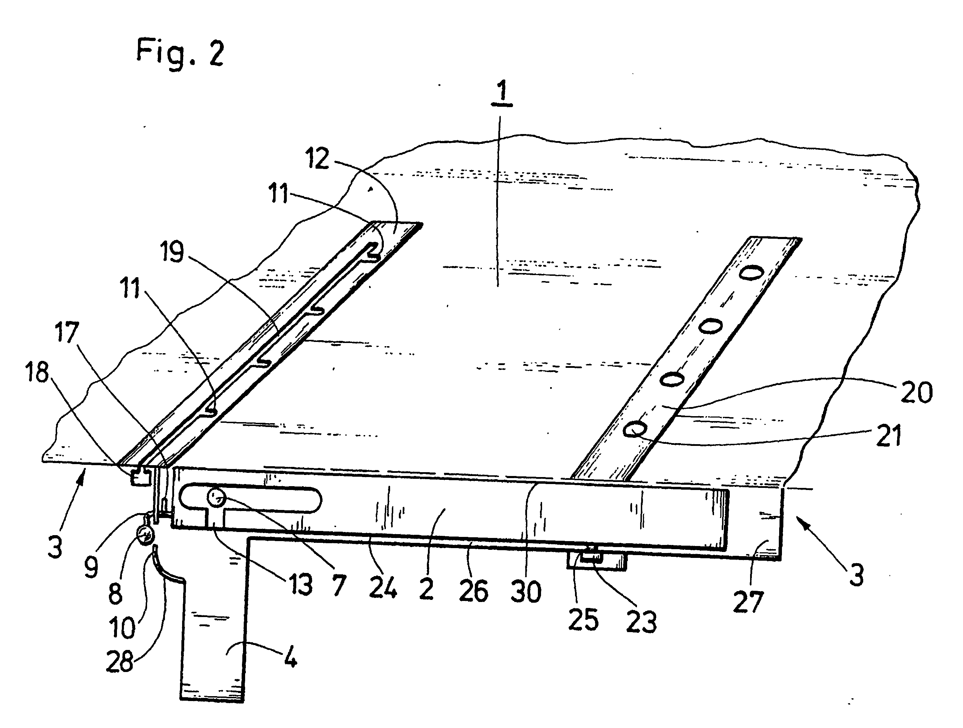

- Fig. 2:: eine perspektivische Darstellung einer Ladefläche vor Anheben der Runge aus ihrer Lagertasche und vor Einführung des Sicherungshakens in die Führungsschiene;

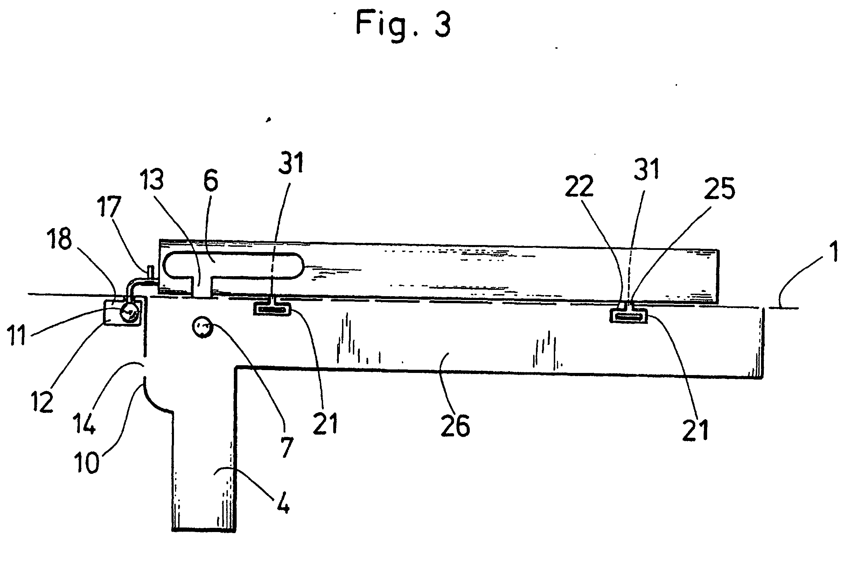

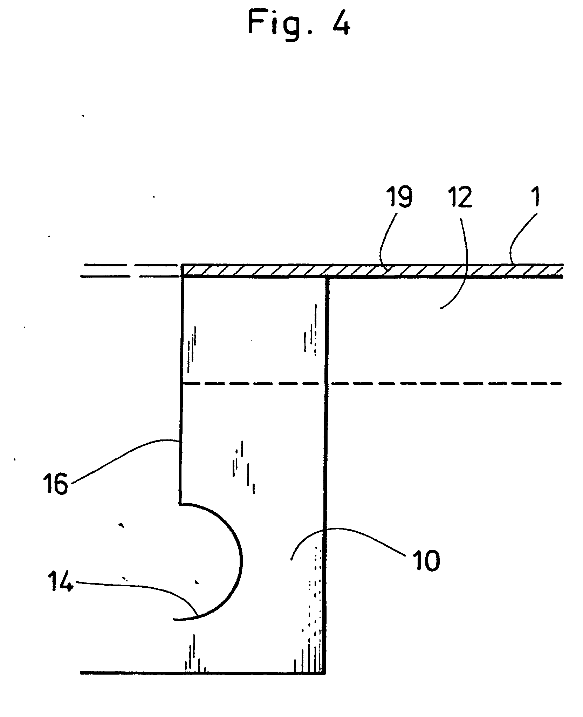

- Fig. 3:: eine Seitenansicht der Runge mit dem in einer Aufnahmebucht der Führungsschiene eingeführten Sicherungshaken;
- Fig.: 4:: eine schematische Darstellung einer mit der Führungsschiene verbundenen Kulisse und

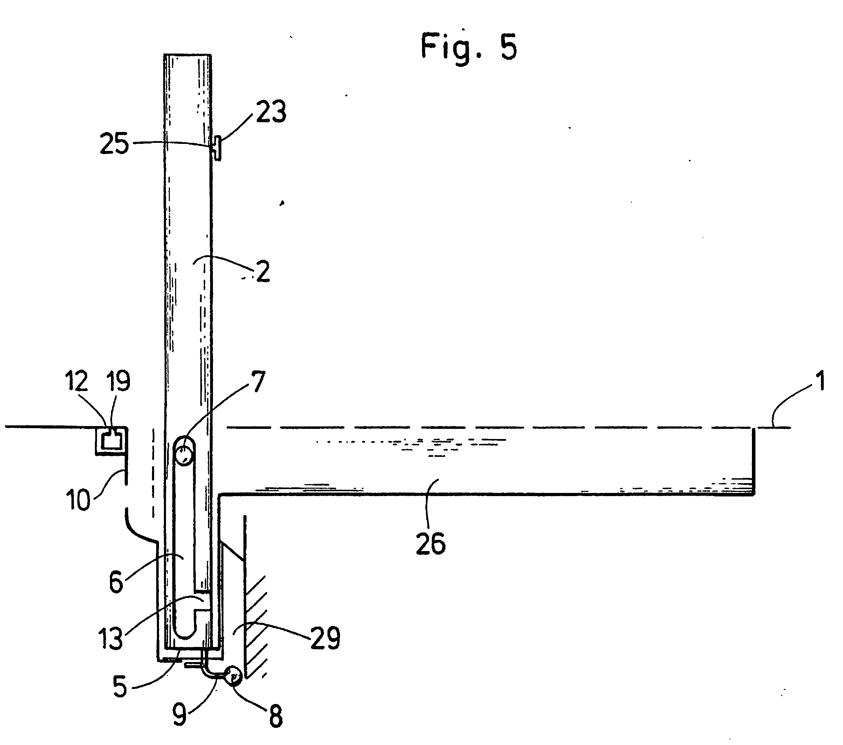

- Fig. 5:: eine Vorrichtung mit einer in die Rungentasche eingesetzten Runge.

Eine erfindungsgemäße Ladefläche 1 eines Transportfahrzeuges mit Vorrichtungen zur Sicherung von Ladung auf der Ladefläche 1 besteht im wesentlichen aus einer Mehrzahl von mit der Ladefläche 1 beweglich verbundenen Rungen 2, die in entlang der Seitenkanten 3 der Ladefläche 1 angeordneten Rungentaschen 4 in vertikaler Stellung einsetzbar sind, wobei die Runge 2 im Bereich ihres der Rungentasche 4 zugewandten unteren Endes 5 in ihren Längsrichtungen verlaufende Führungsschlitze 6 aufweist, die von einem quer über die Rungentasche 4 verlaufenden Sicherungsbolzen 7 durchdrungen sind und ein an seinem Ende mit einer Kugel 8 versehener Sicherungshaken 9 das Ende 5 überragt, dem eine Kulisse 10 zu seiner Einführung und eine in Querrichtung der Ladefläche 1 sich erstreckende, mit Aufnahmebuchten 11 für den Sicherungshaken 9 versehene Führungsschiene 12 zugeordnet sind.

Die Runge 2 besteht vorzugsweise aus einem Vierkantprofil, dessen Abmessungen die Rungentasche 4 angepaßt ist. Die in der Runge 2 angeordneten Führungsschlitze 6 sind in Längsrichtungen der Runge 2 geschlossen und weisen jeweils einen rechtwinklig zu den Führungsschlitzen 6 verlaufenden, einen seitlichen, den Sicherungsbolzen 7 freigebenden offenen Schlitz 13 auf. Die an dem Sicherungshaken 9 an dessen Ende angeordnete Kugel 8 weist Abmessungen auf, die einer Öffnung 14 in der Kulisse 10 im Sinne einer Durchführung der Kugel 8 angepaßt ist. Der Sicherungshaken 9 ist mit einem Schaft 15 versehen, dessen Querschnitt einem Schlitz 16 der Kulisse 10 im Sinne einer gleitenden Lagerung des Schaftes 15 angepaßt ist. Der Schaft 15 des Sicherungshakens 9 ist im Abstand zur Runge 2 mit einem eine Eindringtiefe des Sicherungshakens 9 in die Kulisse 10 begrenzenden Anschlag 17 versehen. Die Kulisse 10 ist mit der Führungsschiene 12 in der Weise verbunden, daß die Führungsschiene 12 in ihrem Inneren eine Hohlkammer 18 aufweist, in der die Kugel 8 des Sicherungshakens 9 gleitend in Querrichtungen der Ladefläche 1 gelagert ist. Die Führungsschiene 12 fluchtet mit der Ladefläche 1 und weist an ihrer Oberseite eine den Schaft 15 leitenden Leitschlitz 19 auf der jeweils in definierten Abständen zur Seitenkante 3 die Aufnahmebuchten 11 ausbildet.

Parallel und in einem definierten Abstand zur Führungsschiene 12 verläuft eine zweite Führungsschiene 20, die mit Sacklöchern 21 versehen ist, die in ihren der Ladefläche zugekehrten oberen Bereichen mit die Sacklöcher 21 verengenden Kragen 22 versehen sind. Die Sacklöcher 21 weisen in Querrichtungen zur Ladefläche 1 gleiche Abstände auf, wie die Aufnahmebuchten 11 der Führungsschiene 12.

Diesem Kragen 22 ist jeweils ein Bolzen 23 angepaßt, der die Runge 2 an derjenigen Seitenfläche 24 überragt, die auch von dem offenen Schlitz 13 durchdrungen ist. Der Bolzen 23 ist über einen Bund 25 mit der Runge 2 verbunden.

Die Rungentasche 4 ist parallel zur Seitenkante 3 mit einer Lagertasche 26 verbunden, in die die Runge 2 in ihrer Nichtgebrauchslage eingesenkt und gelagert werden kann. Dabei ist die Lagertasche 26 der Runge 2 in der Weise angepaßt, daß die Ladefläche 1 mit der Runge 2 in deren Nichtgebrauchslage fluchtet. In Längsrichtungen der Lagertasche 5 weist diese einen hinreichenden Freiraum 27 auf, der eine Verschiebung der Runge 2 in ihren Längsrichtungen innerhalb der Ladetasche 26 er möglicht.

Auf der der Ladetasche 26 gegenüberliegenden Seite der Rungentasche 4 ist diese mit der Kulisse 10 über ein Kurvenblech 28 verbunden, dessen Abmessungen einer Schwenkbewegung des Sicherungshakens beim Aufrichten der Runge freilassend angepaßt sind. Die Rungentasche 4 ist im Bereich ihrer dem Kurvenblech 28 abgewandten unteren Seite mit einer Ausnehmung 29 versehen, in der der Sicherungshaken 9 in einer senkrechten Stellung der Runge 2 in der Rungentasche 4 angeordnet ist. Die Runge 2 ist an ihrer der Seitenfläche 24 gegenüberliegenden Fläche 30 mit Ausnehmungen 31 für einen Betätigungshaken versehen. Es ist auch möglich, an dieser Flächen eingesenkte Betätigungsgriffe vorzusehen.

Eine erfindungsgemäße Ladefläche kann für die Ladungssicherung in folgender Weise eingesetzt werden:

In ihrer Nichtgebrauchslage ist eine Runge 2 in der Lagertasche 26 in der Weise gelagert, daß sie mit der Ladefläche 1 fluchtet und insoweit einen Be- und Entladevorgang auf der Ladefläche nicht behindert. Die Runge 2 ist dabei gegen ein versehentliches Herausreißen aus der Lagertasche 26 mit dem Sicherungsbolzen 7 gesichert, der quer über die Rungentasche 4 läuft. Der Sicherungsbolzen ist in den Führungsschlitzen 6 in der Weise angeordnet, daß die Runge 2 in ihren Längsrichtungen verschieblich gelagert ist.
Um die Runge 2 als seitliche Ladungssicherung im Abstand zur Seitenkante 3 der Ladefläche 1 einzusetzen, kann sie mit ihrem unteren Ende 5 und dem daran befestigten Sicherungshaken 9 durch die Kulisse 10 soweit verschoben werden, daß die mit dem Sicherungshaken 9 verbundene Kugel 8 durch die Öffnung 14 der Kulisse 10 hindurchtritt, bis der Anschlag 17 am Schaft 15 des Sicherungshakens 9 an die Kulisse 10 anstößt. In dieser Lage liegt der offene Schlitz 16, der mit den Führungsschlitzen 6 in Verbindung steht, unter dem Sicherungsbolzen 7. Dabei ist es möglich, den Sicherungshaken 9 in dem Schlitz 16 der Kulisse 10 gleichzeitig nach oben zu führen, während der Sicherungsbolzen 7 aus dem offenen Schlitz 13 herausgleitet und die Runge 2 in eine annähernd waagerechten Position angehoben werden kann. Dabei verhindert der Anschlag 17 im Zusammenwirken mit der Kugel 8 am Sicherungshaken 9 im Bereich der Kulisse 10, daß die Runge 2 aus der Kulisse 10 herausgekippt wird, da die Kugel 8 und der Anschlag 17 sich ansonsten an der Kulisse 10 verklemmen würden. Nach Anheben der Runge 2 bis auf die Höhe der Ladefläche 1 gelangt dann die Kugel 8 in die Hohlkammer 18 der Führungsschiene 12, wobei der Sicherungshaken 9 im Leitschlitz 19 der Führungsschiene 12 in Querrichtungen zur Ladefläche 1 gleitend gelagert ist. Dabei lässt sich der Sicherungshaken 9 der Runge 2 in Richtung auf die Mitte der Ladefläche 1 führen. Ein Herausreißen des Sicherungshakens 9 aus der Führungsschiene 12 ist nicht möglich, da die Kugel 8 einen größeren Durchmesser als die lichte Weite der Leitschlitze 19 aufweist. Gleichwohl ist es möglich, die Runge 2 relativ freizügig auf der Ladefläche 1 zu bewegen.

Wenn der Sicherungshaken 9 die für ihn vorgesehene Aufnahmebucht 11 erreicht hat, wird die Runge in einer ihrem unteren Ende 5 abgewandten Richtung verschoben, bis der Bolzen 23 in das der entsprechenden Aufnahmebucht 11 zugewandte Sackloch 21 eingesenkt werden kann. Der Bolzen 23 legt sich hinter den Kragen 22 des ihn umgebenden Sackloches 21 und wird dadurch am Herausbringen aus dem Sackloch gehindert, da der Bund 25 und der Bolzen 23 sich an den Kragen 22 des Sackloches 21 anlehnen und mit diesem eine formschlüssige Verbindung herstellen. Damit ist sowohl in seitlichen als auch in Längsrichtungen der Ladefläche 1 die Runge 2 auf der Ladefläche 1 gesichert.

Die Entfernung der Runge 2 von der Ladefläche wird dadurch bewerkstelligt, daß die Runge 2 so positioniert wird, daß der Bolzen 23 gerade durch den Kragen 22 aus dem Sackloch 21 herausgezogen werden kann und die Runge wieder in Richtung auf die Seitenkante 3 der Ladefläche 1 verschoben wird. Daraufhin wird die Runge 2 mit dem Sicherungshaken 9 in der Kulisse 10 nach unten verschoben und die Kugel 8 aus der Öffnung 14 der Kulisse 10 herausgezogen. Dabei ist dann der Sicherungsbolzen 7 wieder in den offenen Schlitz 13 hineingeführt worden, so daß nach erneutem Anheben der Runge 2 diese schwenkbar auf dem Sicherungsbolzen 7 gelagert ist. Nachdem die Runge 2 hinreichend senkrecht hochgeklappt ist, gleitet sie in die Rungentasche 4 hinein. Der Sicherungshaken 9 wird bei der Schwenkbewegung der Runge 2 am Kurvenblech 28 der Rungentasche 4 vorbeigeführt und gelangt dann bei einer unteren Endstellung der Runge 2 in der Rungentasche 4 in den Bereich der Ausnehmung 29.

Zum Zurückrühren der Runge 2 in ihre Nichtgebrauchslage braucht die Runge 2 einfach nur angehoben und in die Ladetasche 26 eingelegt zu werden. Vorzugsweise wird sie in ihrer Längsrichtung soweit verschoben, bis sie auch den Freiraum 27 der Ladetasche 26 ausfüllt.

## Patentansprüche

1. Ladefläche (1) eines Transportfahrzeuges wie z.B. eines Einsenbahnflachwagens, eines Containerflats, LKWs oder Schiffes mit einer Vorrichtung zur Sicherung von Ladung mit einer Mehrzahl von mit der Ladefläche (1) beweglich verbundenen Rungen (4), die in entlang der Seitenkanten (3) der Ladefläche (1) angeordneten Rungentaschen (4) in vertikaler Stellung einsetzbar sind und eine Runge (2) im Bereich ihres der Rungentasche (4) zugewandten unteren Endes (5) in Längsrichtung der Runge (2) verlaufende Führungsschlitze (6) aufweist, die von einem quer über die Rungentasche (4) verlaufenden Sicherungsbolzen (7) durchdrungen sind, **dadurch gekennzeichnet, daß** ein mit einer Kugel (8) versehener Sicherungshaken (9) das Ende (5) überragt, dem eine Kulisse (10) zu seiner Einführung und eine in Querrichtung der Ladefläche sich erstreckende, mit Aufnahmebuchten (11) für den Sicherungshaken (9) versehene Führungsschiene (12) zugeordnet sind.

2. Ladefläche nach Anspruch 1, **dadurch gekennzeichnet, daß** die Führungsschlitze (1)(6) in ihren Längsrichtungen geschlossen sind und jeweils einen seitlichen, den Sicherungsbolzen (7) freigebenden offenen Schlitz (13) aufweisen.

3. Ladefläche nach Anspruch 1 und 2, **dadurch gekennzeichnet, daß** die Kugel (8) des Sicherungshakens (9) einer Öffnung (14) der Kulisse (10) im Sinne einer Durchführung der Kugel (8) angepaßt ist.

4. Ladefläche nach Anspruch 1 bis 3, **dadurch gekennzeichnet, daß** der Sicherungshaken (9) einen Schaft (15) aufweist, dessen Querschnitt einem Schlitz (16) der Kulisse (10) im Sinne einer gleitenden Lagerung angepaßt ist.

5. Ladefläche nach Anspruch 4, **dadurch gekennzeichnet, daß** der Schaft (15) des Sicherungshakens (9) im Abstand zum unteren Ende (5) der Runge (2) einen eine Eindringtiefe des Schaftes (15) in die Kulisse (10) begrenzenden Anschlag (17) aufweist.

6. Ladefläche nach Anspruch 1 bis 5, **dadurch gekennzeichnet, daß** die Kulisse (10) mit der Führungsschiene (12) verbunden ist und die Kugel (8) in einer Hohlkammer (18) der Führungsschiene (12) gleitend gelagert ist.

7. Ladefläche nach Anspruch 1 bis 6, **dadurch gekennzeichnet, daß** die Runge (2) an ihrer unteren Seitenfläche (24), die in der Nichtgebrauchslage der Runge (2) der Rungentasche (4) und einer mit ihr verbundenen Ladetasche für die Runge (2) zugekehrt ist, einen Bolzen (23) aufweist, der über einen Bund (25) mit der Runge (2) verbunden ist.

8. Ladefläche nach Anspruch 7, **dadurch gekennzeichnet, daß** die Ladefläche (1) mit einer der Führungsschiene (12) parallel verlaufenden zweiten Führungsschiene (20) versehen ist, die mit den Bolzen (23) aufnehmenden Sacklöchern (21) ausgestattet ist.

9. Ladefläche nach Anspruch 8, **dadurch gekennzeichnet, daß** die Anzahl und die Abstände der Sacklöcher (21) in der zweiten Führungsschiene (20) der Anzahl und den Abständen der Aufnahmebuchten (11) der Führungsschiene (12) entsprechen.

10. Ladefläche nach Anspruch 8 oder 9, **dadurch gekennzeichnet, daß** der Bund (25) eines Bolzens (23) und der Bolzen (23) sich an einem oberen Kragen (22) eines Sackloches im Sinne einer formschlüssigen Halterung der Runge (2) in Querund Längsrichtungen der Ladefläche (1) abstützen.

11. Ladefläche nach Anspruch 1 bis 10, **dadurch gekennzeichnet, daß** die Kulisse (10) über ein Kurvenblech (28) mit der Rungentasche (4) verbunden ist, das einer Schwenkbewegung des Sicherungshakens (9) angepaßt ist.

12. Ladefläche nach Anspruch 1 bis 11, **dadurch gekennzeichnet, daß** die Rungentasche (4) im Bereich ihrer dem Kurvenblech (28) abgewandten Seite eine Ausnehmung (29) aufweist, in der der Sicherungshaken in einer senkrechten Gebrauchsstellung der Runge (2) angeordnet ist.

13. Ladefläche nach Anspruch 7 bis 12, **dadurch gekennzeichnet, daß** die Runge (2) an ihrer der unteren Seitenfläche (24) gegenüberliegenden Fläche (30) Ausnehmungen (31) für einen Betätigungshaken aufweist.

14. Ladefläche nach Anspruch 7 bis 12, **dadurch gekennzeichnet, daß** die Runge (2) an ihrer Fläche (30) versenkte Betätigungsgriffe aufweist.

15. Ladefläche nach Anspruch 1 bis 14, **dadurch gekennzeichnet, daß** die Ladetasche (26) der Runge (2) in der Weise angepaßt ist, daß in der Nichtgebrauchslage die Fläche (30) der Runge (2) mit der Ladefläche (1) fluchtet.

## Claims

1. A loading area (1) for a transport vehicle, such as a flat railway wagon, a flatbed container vehicle, a lorry or a ship, for example, comprising an apparatus for securing a load, which apparatus comprises a multiplicity of stanchions (2) which are movably attached to the loading area (1) and which can be inserted in a vertical position in stanchion pockets (4) disposed along the side edges (3) of the loading area (1), wherein a stanchion (2) comprises guide slots (6) which are penetrated by a securing pin (7) which extends transversely above the stanchion pocket (4), which guide slots are disposed in the region of the lower end (5) of the stanchion facing the stanchion pocket (4) and which extend in the longitudinal direction of the stanchion (2), **characterised in that** a securing hook (9) which is provided with a ball (8) protrudes beyond the end (5), and is associated with a gate (10) for the introduction thereof and is associated with a guide rail (12) which extends in a transverse direction of the loading area and which is provided with receiving recesses (11) for the securing hooks (9).

2. A loading area according to claim 1, **characterised in that** the guide slots (1) (6) are closed in the longitudinal directions thereof and each comprise an open lateral slot (13) which releases the securing pin (7).

3. A loading area according to claims 1 and 2, **characterised in that** the ball (8) of the securing hook (9) is matched to an opening (14) in the gate (10) so that the ball (8) can be passed through said opening.

4. A loading area according to claims 1 to 3, **characterised in that** the securing hook (9) comprises a shank (15), the cross-section of which is matched to a slot (16) in the gate (10) so that the securing hook is mounted and can slide therein.

5. A loading area according to claim 4, **characterised in that** the shank (15) of the securing hook (9) comprises a stop (17) which limits the depth of insertion of the shank (15) in the gate (10) and which is at a distance from the lower end (5) of the stanchion (2).

6. A loading area according to claims 1 to 5, **characterised in that** the gate (10) is attached to the guide rail (12) and the ball (8) is mounted in a hollow chamber (18) in the guide rail (12) so that it can slide therein.

7. A loading area according to claims 1 to 6, **characterised in that** on its lower side face (24), which in the position of non-use of the stanchion (2) faces both the stanchion pocket (4) and a loading pocket for the stanchion (2) which is attached thereto, the stanchion (2) comprises a pin (23) which is attached via a collar (25) to the stanchion (2).

8. A loading area according to claim 7, **characterised in that** the loading area (1) is provided with a second guide rail (20) which is parallel to the guide rail (12) and which is equipped with blind holes (21) which receive the pins (23).

9. A loading area according to claim 8, **characterised in that** the number and spacings of the blind holes (21) in the second guide rail (20) correspond to the number and spacings of the receiving recesses (11) in the guide rail (12).

10. A loading area according to claim 8 or 9, **characterised in that** the collar (25) of a pin (23) and the pin (23) are supported on an upper collar (22) of a blind hole to form a positive mounting for the stanchion (2) in the transverse and longitudinal directions of the loading area (1).

11. A loading area according to claims 1 to 10, **characterised in that** the gate (10) is attached to the stanchion pocket (4) via a curved metal sheet (28) which is matched to a swivelling movement of the securing hook (9).

12. A loading area according to claims 1 to 11, **characterised in that** in the region of its side remote from the curved metal sheet (28) the stanchion pocket (4) has a recess (29) in which the securing hook is disposed when the stanchion (2) is in a vertical position of use.

13. A loading area according to claims 7 to 12, **characterised in that** on its opposite face (30) to its lower side face (24) the stanchion has (2) has recesses (31) for an operating hook.

14. A loading area according to claims 7 to 12, **characterised in that** the stanchion (2) has countersunk operating grips on its face (30).

15. A loading area according to claims 1 to 14, **characterised in that** the loading pocket (26) is matched to the stanchion (2) so that in the position of non-use the face (30) of the stanchion (2) is flush with the loading area (1).

## Revendications

1. Plate-forme de chargement (1) d'un véhicule de transport, tel que par exemple d'un wagon ferroviaire plat, d'un conteneur plat, d'un camion ou d'un bateau, comportant un dispositif destiné au blocage du chargement avec une pluralité de ranchers (4) reliés de façon mobile à la plate-forme de chargement (1), qui peuvent être insérés en position verticale dans des poches (4) pour ranchers disposées le long des bords latéraux (3) de la plate-forme de chargement (1), un rancher (2) comportant dans la zone de son extrémité inférieure (5) orientée vers la poche (4) des fentes de guidage (6) s'étendant dans la direction longitudinale du rancher (2), qui sont traversées par un boulon de blocage (7) s'étendant transversalement au-dessus de la poche (4) pour rancher, **caractérisée en ce qu'**un crochet de blocage (9) muni d'une boule (8) dépasse de l'extrémité (5), auquel sont associés une coulisse (10) destinée à son insertion et un rail de guidage (12) s'étendant dans la direction transversale de la plate-forme de chargement, qui est muni de découpes de réception (11) pour le crochet de blocage (9).

2. Plate-forme de chargement selon la revendication 1, **caractérisée en ce que** les fentes de guidage (1) (6) sont fermées dans leurs directions longitudinales, et comportent chacune une fente latérale ouverte (13) libérant le boulon de blocage (7).

3. Plate-forme de chargement selon la revendication 1 ou 2, **caractérisée en ce que** la boule (8) du crochet de blocage (9) est adaptée à un orifice (14) de la coulisse (10) dans le but d'un passage de la boule (8).

4. Plate-forme de chargement selon l'une quelconque des revendications 1 à 3, **caractérisée en ce que** le crochet de blocage (9) comporte une tige (15) dont la section transversale est adaptée à une fente (16) de la coulisse (10) dans le but d'un montage coulissant.

5. Plate-forme de chargement selon la revendication 4, **caractérisée en ce que**, à un certain écartement de l'extrémité inférieure (5) du rancher (2), la tige (15) du crochet de blocage (9) comporte une butée (17) limitant une profondeur d'insertion de la tige (15) dans la coulisse (10).

6. Plate-forme de chargement selon l'une quelconque des revendications 1 à 5, **caractérisée en ce que** la coulisse (10) est reliée au rail de guidage (12), et **en ce que** la boule (8) est logée de façon coulissante dans une chambre creuse (18) du rail de guidage (12).

7. Plate-forme de chargement selon l'une quelconque des revendications 1 à 6, **caractérisée en ce que**, au niveau de sa surface latérale inférieure (24) qui, à l'état non utilisé du rancher (2), est orientée vers la poche (4) pour rancher et vers une poche de chargement pour le rancher (2) reliée à celle-ci, le rancher (2) comporte un boulon (23) qui est relié au rancher (2) par l'intermédiaire d'un épaulement (25).

8. Plate-forme de chargement selon la revendication 7, **caractérisée en ce que** la plate-forme de chargement (1) est munie d'un deuxième rail de guidage (20) s'étendant parallèlement au rail de guidage (12), lequel est muni de trous borgnes (21) recevant le boulon (23).

9. Plate-forme de chargement selon la revendication 8, **caractérisée en ce que** le nombre et les écartements des trous borgnes (21) du deuxième rail de guidage (20) correspondent au nombre et aux écartements des découpes de réception (11) du rail de guidage (12).

10. Plate-forme de chargement selon la revendication 8 ou 9, **caractérisée en ce que** l'épaulement (25) d'un boulon (23), et le boulon (23), prennent appui sur une collerette supérieure (22) d'un trou borgne dans le but d'une retenue par complémentarité de formes du rancher (2) dans les directions transversale et longitudinale de la plate-forme de chargement (1).

11. Plate-forme de chargement selon l'une quelconque des revendications 1 à 10, **caractérisée en ce que** la coulisse (10) est reliée à la poche (4) pour rancher par l'intermédiaire d'une tôle cintrée (28), qui est adaptée à un mouvement de pivotement du crochet de blocage (9).

12. Plate-forme de chargement selon l'une quelconque des revendications 1 à 11, **caractérisée en ce que**, dans la zone de sa face opposée à la tôle cintrée (28), la poche (4) pour rancher comporte un évidement (29) dans lequel le crochet de blocage est disposé dans une position verticale d'utilisation du rancher (2).

13. Plate-forme de chargement selon l'une quelconque des revendications 7 à 12, **caractérisée en ce que**, au niveau de sa surface (30) opposée à la surface latérale inférieure (24), le rancher (2) comporte des évidements (31) destinés à un crochet d'actionnement.

14. Plate-forme de chargement selon l'une quelconque des revendications 7 à 12, **caractérisée en ce que** le rancher (2) comporte des poignées d'actionnement encastrées dans sa surface (30).

15. Plate-forme de chargement selon l'une quelconque des revendications 1 à 14, **caractérisée en ce que** la poche de chargement (26) est adaptée au rancher (2) de telle sorte que, à l'état non utilisé, la surface (30) du rancher (2) soit alignée avec la plate-forme de chargement (1).
